# EUROPEAN PATENT APPLICATION

(11) **EP 1 403 999 A2**
(43) Date of publication of application: **31.03.2004**
(21) Application number: 03028027.5
(22) Date of filing: 14.02.1996
(51) Int. Cl.: H02J 13/00

(54) **System for displaying information in a domestic environment**

(30) Priority: 20.02.1995 IT to950119
(62) Divisional of application: 96102131.8
(71) Applicant: WRAP S.p.A., 60044 Fabriano (AN) (IT)
(72) Inventor: Aisa, Valerio, 60044 Fabriano (AN) (IT)
(74) Representative: Dini, Roberto, Dr. Ing.

(57) **Abstract**

A system and a method for displaying information in a domestic environment is herein described, in which a plurality of domestic loads are installed, including household apparatuses (LB,LS,FO,CA,TV), a part of which being equipped with a control system (SC) and means (IN) for receiving information available on an appropriate domestic communication bus.

The present invention is characterized in that at least one of said domestic loads is apt to receive information contained on said domestic bus and display them.

## Description

The present invention refers to a system for displaying information in a domestic environment in which a plurality of domestic loads have been installed.

It is known that the theme of the home automation, i.e. of the integrated management of different electric devices being present in a home, is always increasing in interest.

The known home automation systems involve the presence of a central supervisor unit that usually provides to manage the different household appliances, by controlling some "smart" sockets, that therefore control the supply of the energy to the different household appliances by means of ON/OFF type operations.

These known centralized supervision systems present some drawbacks.

A first type of drawback is due to the complexity of the control units, which, having to manage a plurality of different domestic apparatuses in different times and ways, must be of the programmable type; this necessarily implies that the user is forced to a complicated programming activity.

A second type of drawback is due to the poor efficiency of the control and supervision system, which, as said before, manages the electric supply of different domestic apparatuses solely with ON/OFF type operations driven through the so called "smart" supply sockets; such control mode is clearly very elementary and approximate.

A third type of drawback is caused by the cost of the central supervision unit which, because of its programmability, needs a suitable user interface, composed typically by a keyboard and a display, and an electronic control system with suitable elaboration and memory capability (for example a personal computer).

The main aim of the present invention is that of solving the cited drawbacks of the known systems for managing house electric loads (represented, i.e., by household appliances such as washing or cooking machines), based on the use of supervision and control units of the centralized type.

Within such aim, the present invention intends to provide for an optimized management method, that avoids to overcome the limits of the installed maximum power being established by the contract with the electric energy supplier, and also allows to favour the use of different household appliances during time periods of reduced energy cost; the present invention intends similarly to show a method in which the optimized management of the energy can be obtained in a fully automatic way, without any action by the user.

These and other aims, that will appear clearer in the following, are reached according to the invention, by a system for displaying information in a domestic environment incorporating the characteristics of the annexed claims.

The characteristics and advantages of the present invention will become clear from the following description and the annexed drawings, which are supplied by way of non limiting example, wherein:
- Fig. 1 schematically represents a domestic electric system, equipped with some domestic loads realized according to the present invention;
- Fig. 2 represents, through a flow chart, the control system's general mode for managing the electrical energy consumption according to the invention;
- Fig. 3a represents in schematic form a possible embodiment of an apparatus for measuring the instantaneous electric energy consumption in a home, of the type suitable for the aims of the present invention;
- Fig. 3b represents a possible embodiment of an energy meter being able to provide, besides the value of the current energy consumption, further useful information for the aims of the present invention;
- Fig. 4 illustrates in schematic form the concept of "synergy" among different domestic loads, that is a direct consequence of the system according to the present invention.

According to the present invention, the overcoming of limitations of the known management systems is obtained through the use of electric appliances able to dynamically self-adjust their own energy consumption, changing it continually with respect to the global energetic exigencies (variable during the day) of the domestic environment wherein they are to operate.

In other words, according to the invention, these household appliances are. equipped with control systems presenting the following main features:
1. capability of receiving through a suitable transmitting mean and a suitable electronic interface, within regular intervals, a piece of information about the instantaneous electrical energy consumption of the domestic environment into which the appliances themselves operate. This piece of information is supplied by a suitable, external measuring apparatus;
2. capability of evaluating said piece of information with respect to the limits of the available maximum power established by the contract with the energy supplier;
3. capability of managing the power consumption with respect to the peculiar functions of the household appliance and, where possible, to the functions of the other electrical apparatuses in the domestic environment.

From the first cited point, the need is evidenced of having a suitable instrument for measuring the electric power being absorbed by the domestic environment. It is also evidenced the need of having an adequate communication system between the aforementioned measuring apparatus and the domestic loads, that are, according to the invention, equipped with a dynamic self adjustment system of the energy consumption.

From the second cited point the need is evidenced of equipping the household appliance with a control system, being easily programmable with respect to the limits of the maximum power established by the contract between the user and the supplier of the electric energy .

From the third point, finally, the necessity emerges of defining priority rules among the different domestic loads, in order to ensure a dynamical distribution of the power, which is optimized in function of the type of the household appliances that are active from time to time, and in function of the importance of their role for the user.

In the following of the present description there will be shown firstly the general method for optimizing and rationalizing the consumption of the electric energy in a domestic environment and, secondly, some possible embodiments for satisfying the needs evidenced by the above mentioned three points.

In particular, the optimized management of the electric energy of the domestic environment is obtained, according to the invention, by means of the following two actions:
- hindering the overcoming of the limits of current absorption fixed by the supply contract (contractual power), i.e. to avoid black-outs due to the action of the power limiter;
- promoting in a simple way the use of different household electric appliances during time periods in which the electric energy has a reduced cost.

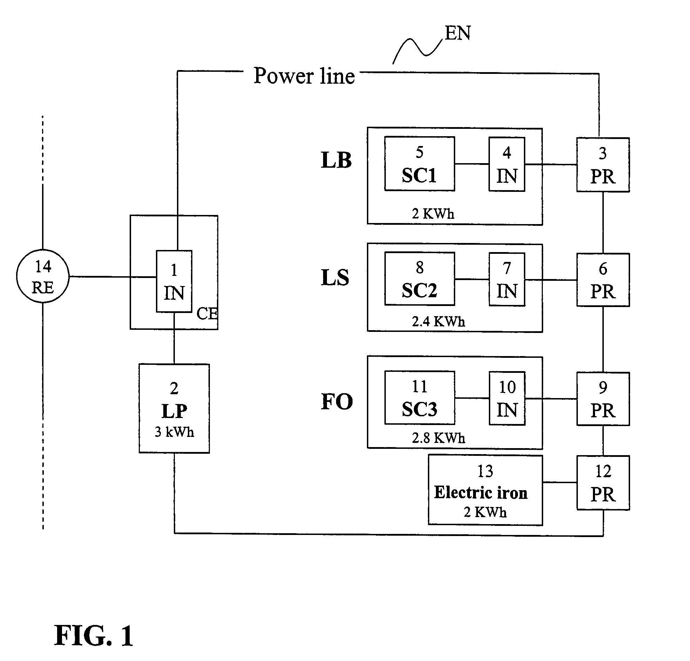

Fig. 1 show schematically a domestic electric system, wherein part of the loads (household appliances LB, LS and FO), according to the present invention, are able to self-adjust their own energy consumption. The electric energy is taken from an external power mains RE (block 14), through an energy meter CE.

The power supplied through the meter CE is, as it normally happens, limited by means of a power limiter LP (block 2) that limits the installed power, in agreement with the supply contract that, in the case of the represented example, establishes a maximum power limit of 3 kW (contractual power).

Four electric appliances, being typically present in a domestic environment, are supplied through four sockets indicated with PR (blocks 3, 6, 9 and 12):
a laundry washing machine LB with rated power of 2 kW, a dishwashing machine LS with rated power of 2.4 kWh, an oven FO with rated power of 2.8 kWh and an electric iron (block 13) with rated power of 2 kWh.

The energy meter CE, the laundry washing machine LB, the dishwashing machine LS and the oven FO are connected to the electric network by means of a suitable electronic interface IN (blocks 1, 4, 7 and 10), having the aim of allowing a reciprocal exchange of information, according to the present invention; in the case herein described as an example, this is obtained through the known system of the powerline carrier communication, according to which said exchange of information is carried out through the same electric network, using a suitable bi-directional modem of the half-duplex type, i.e. a device able to exchange the information in the two directions, but at different times.

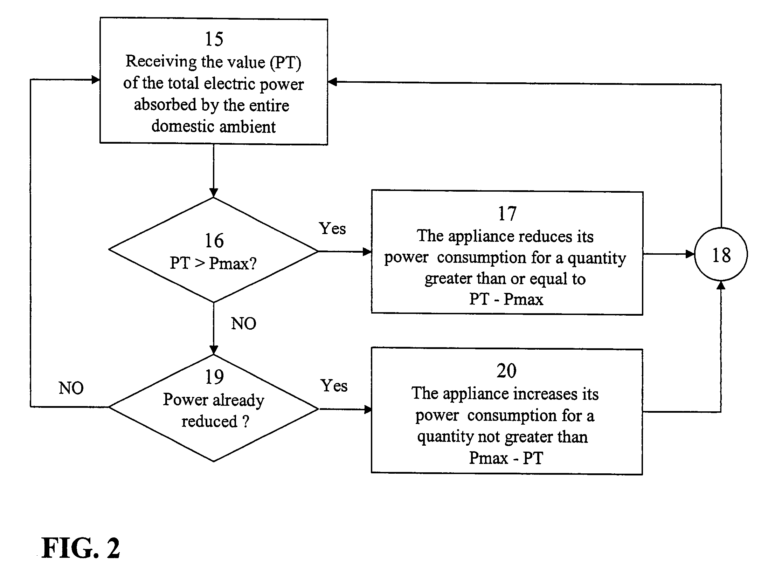

The three household appliances LB, LS and FO, represented in Fig. 1, are furthermore equipped with a suitable control system, indicated respectively with SC1 (block 5), SC2 (block 8) and SC3 (block 11). Such control system, that in the following will be generically indicated with SC, is of fundamental importance for the aims of the present invention, since it allows the rationalization of the electric power consumption according to the mode shown in the flow chart shown in Fig. 2, that describes the general method through which, according to the invention, the energy consumption of a household appliance is self-adjusted.

It has to be specified that the way of exchanging the information among the electric household appliances LB, LS and FO (i.e. the so-called communication protocols), does not represent the finality of the present invention, which only supposes the existence, in the domestic environment, of a suitable communication means or "bus", i.e. a suitable transmission line (in the case described herein, the power mains) onto which the flow of information is managed by means of suitable rules (protocols), being in conformity with the specific international standards in the matter of safety, electromagnetic compatibility and information exchange.

For example, a "domestic bus" that satisfies all the requirements of the aforementioned international standards is that known as EHS (European Home System), nowadays known as KONNEX, recently developed in the purview of the program Esprit of the European Community. Another "bus" that satisfies the aforementioned international standards and which can be conveniently utilized in the present invention, is that proposed by the US Company Echelon, known with the name of LON (Local

Operating Network), nowadays known as LONTALK.

In Fig. 2 a flow chart is represented, that describes the way in which the control system SC of any single household appliance, being realized according to the present invention, is able to self-adjust its own electric energy consumption, in the respect of limits of the available power established by the supply contract. In such Fig. 2, block 15 represents the communication element, according to invention, between the control system SC of any of the three electric appliances LB, LS and FO of Fig. 1 and a device that measures constantly the total electric power being absorbed (by way of non limiting example, in Fig. 1 such a device coincides with the energy meter CE of the domestic environment, equipped with suitable features that will be described in the following).

As already said, block 15 implies the existence of a communication "bus", that allows for the dialogue between the energy meter CE and the single electric appliances LB, LS and FO, in accordance with the international standards in the matter of safety, electromagnetic compatibility and information exchange procedures.

Through block 15, the control system SC of each of the three household appliances (LB, LS and FO) receives from the energy meter CE, within regular time intervals (for example once any minute), the current value of the total power PT being absorbed at that instant by different active electric loads of the domestic environment.

Block 16 is a test block, through which the control system SC of each of the three household appliances verify if the current value of the total power being absorbed by different domestic loads is higher than the maximum one (Pmax), which is established by the supply contract (contractual power) and adjusted by means of the power limiter LP (block 2 of Fig. 1). If PT is higher than Pmax, then the control passes to block 17, and the control system SC provides for reducing the energy consumption of the relevant electric appliance of a quantity being higher or equal to the difference PT-Pmax; successively, through block 18, the control returns to block 15, so that the control system SC can update the value of the total power absorbed by different active electric loads of the domestic environment.

If, coming back to block 16, PT it is lower or equal to Pmax, then the control passes to block 19, that it is a test block through which the control system SC verifies the power absorption state of the relevant household appliance.

If the appliance is in normal operating conditions, i.e. if there has not been any previous reduction of the power necessary at that moment for its normal operation, the control will pass again to block 15, for an updating of the total absorbed power.

On the contrary, if the control system SC has been previously obliged to reduce the energy consumption of the relevant electric appliance (block 17), the control will pass to block 20, that will operate again an increase of the power consumption, but taking into account that the maximum power quantity being added cannot exceed the difference Pmax-PT.

Successively, the control will return again to block 15, through block 18.

Blocks 17 and 20 therefore represent respectively the ability of the control system SC of each household appliance, of reducing or leading to the normality status the energy consumption required by some particular phase of the operating cycle, in which the household appliance operates. Such ability depends, obviously, upon the degrees of freedom of the control system SC.

In the specific case of the household appliances LB, LS and FO represented in Fig. 1, where the greater part of the power absorbed related to heating elements, we can think, for example, of fractioning said power between more elements (i.e. at least two resistances), in order to have the maximum energy absorption when all the heating elements are supplied. In that case, for reducing or increasing the power absorbed, it will be sufficient to deactivate or activate the single heating elements, according to the needs.

Thus, greater is the number of the heating elements, higher will be the number of freedom degrees available for the control system SC and more rigorous will be, as a result, the management of the energy.

Block 15 of Fig. 2 expresses, as said before, the interaction between the energy meter CE and the household appliances (LB, LS and FO) equipped with a suitable control system SC, according to invention, that is able to manage such interaction.

Such a block 15 supposes thus that the energy meter CE is able to send, within regular time intervals, through a suitable transmission means (that, as said before, in the specific case of Fig. 1 is the powerline carrier communication system) and with a standard exchange mode (e.g. protocol EHS or LON), the information relating to the total power absorbed by different loads active in the domestic environment.

The condition that the meter CE is able to talk directly with the household appliances represents, as said, a purely exemplifying and non limiting peculiar case of the present description; such condition is sufficient and desirable, being economic and showing good requirements for the standardization of the proposed method, but it is not strictly necessary for the purposes of the present invention.

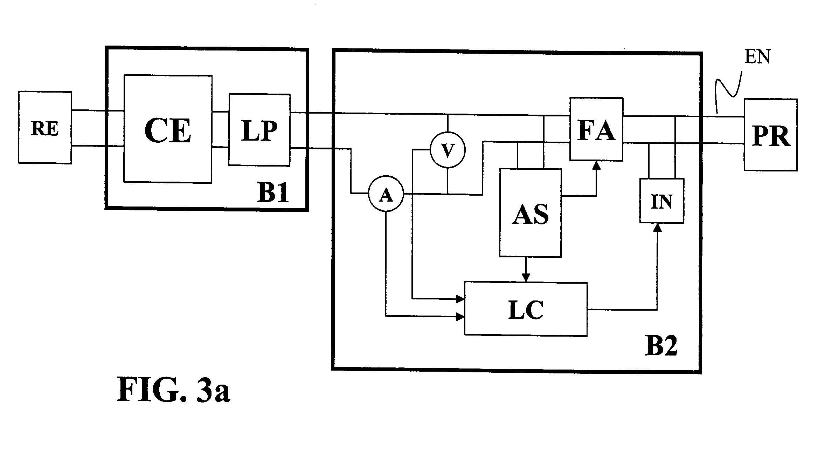

In fact, more in general, we can think to employ any measuring apparatus, even external to the meter CE, being able to measure the total power supplied and to send such information on a suitable "bus", to which the different domestic electric loads, according to invention, are connected (a possible embodiment of such a measuring apparatus is represented in Fig. 3a and described in the following).

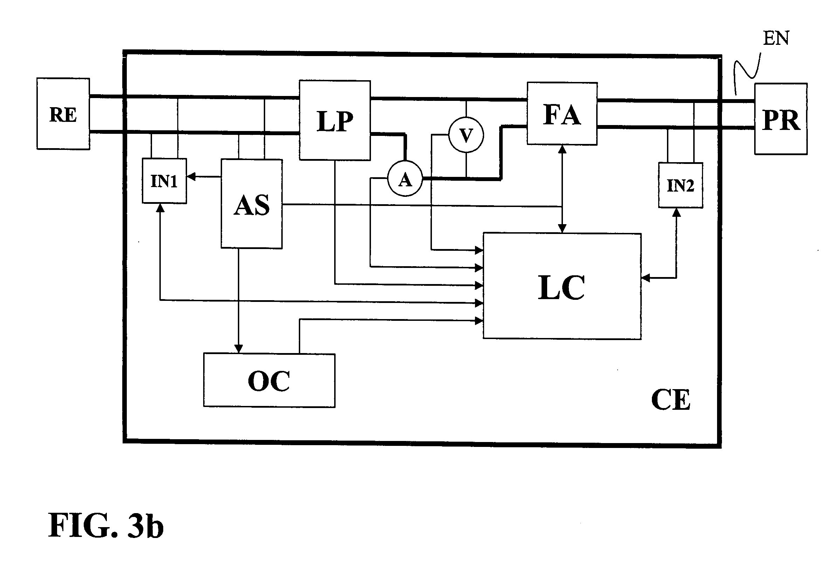

Coming back to Fig. 2, blocks 16, 17 and 20 imply, finally, the knowledge, for the control system SC of each electric appliance, of the value of the contractual power Pmax. Such value may be signalled to the control system SC by using suitable hardware configuration means (eg. configuration jumpers or switches) at the moment of the installation of the electric appliance, or, even better, may be made available on the communication bus by the energy meter CE itself (as will be described referring to Fig. 3b), so allowing to the control system SC of each electric appliance to configure itself.

The logic of the energy consumption management, expressed in the flow chart of Fig. 2 is enhanced with the concept of the priority management between different domestic loads.

In fact, in the case in which the oven FO and the dishwashing machine LS of Fig. 1 are simultaneously active, the latter can decide automatically to let more energy to the oven, the cooking of the food being considered a priority if compared to the washing of dishes; as a consequence, the washing machine will continue with the heating of the water only during the natural pauses of the heating of the oven.

In other words, it is possible according to the present invention, to let more household appliances operative, which share all together an electric power that is greater than that provided for the single domestic load, without any black-outs. This result is obtained on the basis of the consideration that the household appliances have different operative phases during which the electric current absorptions are different: therefore, by managing with cleverness the single operative phases and by knowing how much other "not smart" household appliances are consuming, it is possible to operate in a "time sharing" mode, letting a plurality of household appliances operative, without causing the exceeding of the contractual installed power.

This supposes that each "smart" household appliance declares constantly, onto the communication "bus" for communicating with the other loads, its instant consumption of electric energy and/or an information that allows to such other loads to know that such "smart" household appliance is operating; such information delivered on the bus is advantageously represented by the priority level of the household appliance, established on the basis of possibly. standardized rules.

In the case in which an electric load is not equipped with a control system SC, according to the present invention, as it happens, for example, for the electric iron (block 13) of Fig. 1, then it will have automatically assigned the maximum priority, if compared to the other loads, due to the fact that the electric iron does not have the ability to self-adjust its own energy consumption in relation to the global consumption of the domestic environment.

In Fig. 3a the block diagram is represented of an apparatus being able to measure the total power supplied in the domestic environment and to send such information on the communication "bus". In such Fig. 3a two blocks can be identified: block B1, being associated to the energy meter CE and to the power limiter LP, and block B2, relating to the apparatus that constantly measures the total power absorbed by an ensemble of active electric loads, and sends within regular time intervals, said measures to the same loads, in particular to the household appliances LB, LS and FO, that are able to take advantage of such an information in order to self-adjust themselves.

Such information is sent, as already exemplified, by means of the powerline carrier communication transmission system, i.e. through the same wires of the domestic electric network.

It appears therefore natural that the functions carried out by the measuring apparatus of the total power absorbed should be embodied in the same meter CE, since the main function of the meter is that of carrying out the same measure of the supplied power; however, considering that in most of countries of the world (between those Italy), an energy meter being able to talk with the different household appliances is not presently available, it has to be considered, even provisionally, the presence of the aforementioned external apparatus B2.

Considering block B2 relating to such a measuring apparatus of the total absorbed power, we can distinguish the following parts:
- an ammeter A, for measuring the current;
- a voltmeter V, for measuring the voltage;
- a control logic LC, for the global management of the measuring apparatus;
- a stabilized power supply AS, for the DC supply, at low voltage, of the different active parts of the system;
- an interface IN, for the information exchange by means of the powerline carrier communication system;
- a filter FA, possibly of active type, for the necessary suppression towards the external world, of the information associated to the powerline carrier communication system.

The control logic LC, based on the use of a microprocessor, performs two fundamental functions: measuring the active power absorbed by the electric loads and delivering such information on the electric line, by means of powerline carrier communication system.

The measure of the absorbed active power is carried out by LC on the basis of the signals sent by the two measuring instruments A and V, and taking into account the value of the phase difference between voltage and current. The power is calculated by the circuit on the basis of the effective voltage values (from voltmeter V), of effective current (from ammeter A), and of the value of the phase difference, obtained by measuring the elapsed time between the instant in which the voltage is zero and that in which the current is zero. The transmission on the domestic "bus" of the measured value of the active power, being absorbed by the domestic loads, is carried out by LC through the interface IN of Fig. 3a.

The interface IN of Fig. 3a is a complex one, because it must be able to talk with the control unit LC and, in the meantime, must manage the communication on the powerline carrier communication "bus", ensuring the respect of the international standards on the electric safety, the electromagnetic compatibility and the information exchange procedures.

The interface IN of block B 1 is not herein described in detail, because this is not, as already said, the finality of the present invention; such interfaces can be, in any case, of any known type; in the specific case, it is supposed that said interface is of a kind similar to interfaces IN (blocks 4, 7 and 10) of Fig. 1; by way of example, such interface IN or IN1 may be realized through a bi-directional modem of the half-duplex type, of the type ST 7537 by SGS Thomson, associated to a suitable microcontroller for the management of the information exchange protocol.

Fig. 3b show a block diagram of an energy meter that is able to supply all the information being necessary for an advantageous embodiment of the present invention. Besides the blocks already described with reference to Fig. 3a, the following additional blocks are present:
- an interface IN1, in order to allow the remote reading by electric energy supplier;
- a clock OC, for the management of the instant time and of different hourly fees;
- a selector LP for the limitation of the maximum power which can be supplied on the basis of the supply contract agreed between the user and the supplier. In this case, the main functions of the control unit LC of Fig. 3b, realized in a way in itself known, are the following:

- possibility of continuously measuring the supplied active power and counting the measures of the kW of consumed energy (specific function of the electric energy meter);
- possibility of talking, upstream, with the nearest energy distribution power plant, through the system of remote reading based on the powerline carrier communication system;
- possibility of management of fees differentiated in the several time periods, by virtue of the presence of a local clock, which can be eventually managed upstream through the powerline carrier communication system (function which is associated to the remote reading);
- possibility of locally configuring the maximum power supplied on the basis of the supply contract agreed between the user and the supplier;
- possibility of talking, downstream, with the different domestic loads, which are prearranged for receiving by an energy meter, within regular time intervals (for example any minute), the following information:
   a) measure of the total power supplied;
   b) maximum value of the power supplied according to the supply contract;
   c) value of the current time;
   d) fees associated to the different time periods.

The aforementioned information a), b), c) and d), supplied by an energy meter of the type described in Fig. 3b, allow, in a way in itself known, household appliances equipped with a control system according to the present invention, to optimize the electric power consumption, so avoiding the exceeding of the limits of the maximum power fixed by the supply contract, and favouring the use of the appliances during time periods in which the electric energy has a reduced cost.

In particular, the information a) and b) allow to manage, in a totally automatic way and according to the way expressed in the flow chart of Fig. 2, the instantaneous consumption of energy, so avoiding the action of the device (LP) that limits the maximum power which can be supplied according the supply contract.

The information c) and d) allow the different household appliances equipped with the control system SC to automatically carry out their function in connection with time periods in which the cost of the energy is reduced. Such type of performance can be set by the user through the simple pressure of a button (energy-saving button associated to time periods with lower fees), without being necessary to indicate the start hour of the operation of the same household apparatus.

Another possibility is that of showing the operation start hour, by means of the rotation of a simple knob, the index of which can vary within an interval of 24 hours, without the complication of setting up a timer with a suitable delay (delay timer) calculated with respect to the current time; in that case, only the information c) is exploited, without the necessity of disposing locally, i.e. inside the household appliances, of a clock with the current time, being of difficult management for the user (e.g. the necessity of updating after every black-out) and of considerable cost.

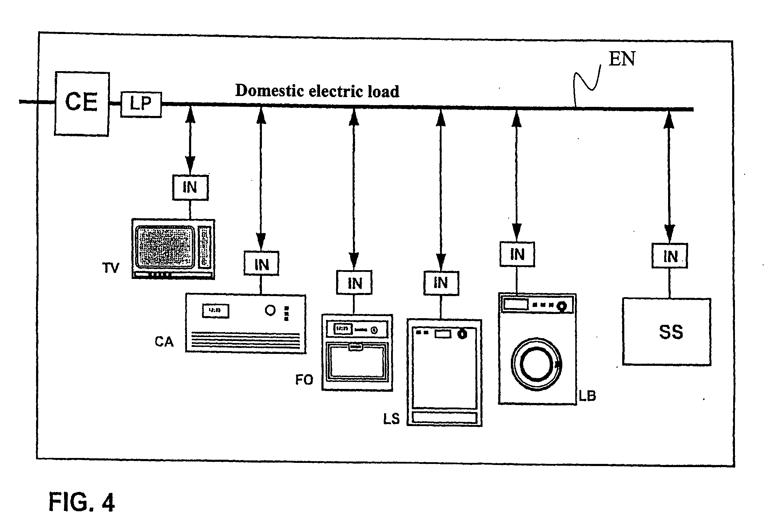

Fig. 4 finally represents in a schematic form the concept of "synergy" between different domestic loads, mainly used in order to avoid the exceeding of maximum rated power available for said loads.

Such a concept is a direct consequence of the high management capacity of the control system, according to the present invention, of the household appliances equipped with the control system SC.

It is in fact possible that each household appliance, being able to optimize the consumptions and to reduce the costs using the information supplied by the energy meter, according to the present invention, is also able to take advantage of any eventual other useful information sent by other domestic electric loads onto the communication "bus".

Such information can for example relate to measures associated to determined sensors being present in particular electric loads.

For example, the laundry washing machine LB, which is equipped with a sensor that measures the hardness of the water in the mains, can share the measured value on the "bus", with a benefit for other interested household appliances, such as the dishwashing machine, the coffee machine, the electric water heater, the electric iron, etc..

Another example may be carried out with reference to an air conditioner CA which, being equipped with air temperature and humidity sensors, can share on the "bus" the measure of these quantities, with a benefit for different interested domestic appliances, such as a refrigerator, a laundry washing machine, etc..

Another example can be made with reference to the home safety system, indicated with SS, that is equipped with sensors being able to detect gas leakages; also such information can be delivered on the "bus", in order to warn other eventual appliances about dangerous situations and allow the self switching-off of all those household appliances that can cause sparks.

A further example may be made with reference to some peculiar domestic electric appliances, that can send on the "bus" information being useful for the user, that can be shown on a television set TV: for example, the oven FO can communicate the end of a cooking process, the washing-machine LB the end of a washing process, a freezer the deadline for the maximum preservation period of a certain foodstuff, and so on. From the above descriptions the characteristics and advantages of the present invention are clear. In particular, according to the present invention, it is possible to obtain the optimal management of the electric energy consumption in a domestic environment, without involving any complex programming action by the user.

The aim of such optimization is that of preventing the exceeding of the power limits established by the supply contract, so avoiding the possible black-out caused by the action of the power limiter (LP), and of favouring the use of the different household appliances during time periods in which the electric energy has a reduced cost. In particular it is evident that, being available domestic electric loads equipped with a control system (SC) having the previously described autonomy characteristics, it is possible to rationalize the consumption of the electric energy in a fully automatic way, without having to employ complex and expensive centralized control apparatuses.

The sole condition for performing said rationalization of the energy consumption, according to proposed method, is the presence of a device that measures the absorbed power, that is able to communicate with the control system of each single "smart" domestic loads.

The domestic loads that are made "smart", according to the present invention, can adapt their own operative cycles in function of the available current and, therefore, also according to eventual "not smart" electric appliances, to which a maximum priority is assigned; eventually, according to invention, the household appliances produced according to the present invention, can also be used to manage in a fully autonomous way the hour, so making unnecessary an on-board clock.

Advantages are finally also evident, in terms of cost for the user, if compared to the known solutions (mainly in consideration of the fact that most of the household appliances actually produced already comprise a microcontroller, the capability of which is not usually fully exploited).

Another aspect of the invention that has to be underlined is the concept of "synergy" between the different domestic loads equipped with the control system SC, based on the possibility of sharing the information associated to different sensors, being available on the communication "bus" of the domestic environment.

It is clear that nmnerous changes are possible for the man skilled in the art to the method described as an example, without departing from the novelty spirit of the inventive idea.

For example, the use of the above mentioned powerline carrier communication system has been shown by way of example, because of its practical convenience, due to the fact that it does not require the installation of any communication line and is thus compatible with the electric network of any domestic environment; it is however clear that other mean can be utilized for the exchange of information being necessary for the present invention, for example a simple cable with two wires, similar to the telephonic pair (that would be the more economic solution), a coaxial cable, a system with radio waves, a infrared radiation system etc..

## Claims

1. A system for displaying information in a domestic environment, in which a plurality of domestic loads are installed, including household apparatuses (LB,LS,FO,CA,TV) equipped with a control system (SC), **characterized in that** said household apparatuses (LB,LS,FO,CA,TV) comprise means (IN) for receiving information available on an appropriate domestic communication bus, and that at least one of said domestic loads is apt to receive a plurality of information contained on said domestic bus and display them.

2. A system for displaying information in a domestic environment according to claim 1, **characterized in that** said domestic load being apt to receive information contained on said domestic bus and display them is a television set (TV) equipped with a control system (SC) and means (IN) for receiving information available on said domestic communication bus.

3. A system for displaying information in a domestic environment according to claim 1 or 2, **characterized in that** said system comprises an electric meter (CE) connected to a household electric network (EN) and to a power mains (RE), said electric meter (CE) comprising means (IN,IN2) to make information available on said domestic bus.

4. A system for displaying information in a domestic environment according to claim 3, **characterized in that** said electric meter (CE) is apt to receive information through said power mains (RE) and make them available on said domestic communication bus.

5. A system for displaying information in a domestic environment according to claim 4, **characterized in that** said electric meter (CE) receives information through said power mains (RE) of the fees associated to different time periods and/or of the value of the current time.

6. A system for displaying information in a domestic environment according to claim 1, **characterized in that** said information on said domestic communication bus allow said domestic loads equipped with a control system (SC) to dynamically self-adjust the own energy consumption.

7. A system for displaying information in a domestic environment according to claim 1, **characterized in that** said household apparatuses (LB,LS,FO,CA,TV) equipped with a control system (SC) comprise means for sending information to said domestic bus.

8. A system for displaying information in a domestic environment according to one of the previous claims, **characterized in that** said domestic bus is a powerline carrier communication line, in which the information flow is managed by means of appropriate protocols.

9. A system for displaying information in a domestic environment according to claim 9, **characterized in that** said communication line coincides with the domestic electric network (EN).

10. A method for displaying information in a domestic environment, in which a plurality of domestic loads are installed, including domestic apparatuses (LB,LS,FO,CA,TV) equipped with a control system (SC), **characterized in that** it provides the steps of:
- equipping said domestic apparatuses (LB,LS,FO,CA,TV) with means (IN) for receiving information available on an appropriate communication bus,
- making a plurality of information available on said communication bus,
- providing one or more domestic loads being apt to read information available on said domestic bus and display them.

11. A method for displaying information in a domestic environment according to claim 10, **characterized in that** said method provides to make information from outside said domestic environment available on said domestic bus, said information being received through an appropriate electric meter (CE) connected to said domestic electric network (EN) and to a power mains (RE).

12. A method for displaying information in a domestic environment according to claim 10, **characterized in that** said method provides using an appropriate electric power measuring device being apt to make information of the instantaneous power absorbed by said domestic loads installed in said domestic environment available on said bus.

13. A method for displaying information in a domestic environment according to claim 10, **characterized in that** said method provides for one or more of said household apparatuses (LB,LS,FO,CA,TV) being apt to send information to said domestic bus.

14. A method for displaying information in a domestic environment according to claim 12, **characterized in that** said household environment comprises a television set (TV) being apt to receive information available on said domestic bus and display them.

15. A method for displaying information in a domestic environment according to claim 12, **characterized in that** said domestic bus is a powerline carrier communication line, in which the information flow is managed by means of appropriate protocols.

16. A method for displaying information in a domestic environment according to claim 14, **characterized in that** said communication line coincides with the domestic electric network (EN).
